(19)

**Europäisches Patentamt**
**European Patent Office**
**Office européen des brevets**

(11) **EP 4 682 006 A1**

(12) **EUROPEAN PATENT APPLICATION**

(43) Date of publication:
**21.01.2026  Bulletin 2026/04**

(21) Application number: **25154357.5**

(22) Date of filing: **28.01.2025**

(51) International Patent Classification (IPC):
*B60W 30/12* (2020.01)          *B60W 30/18* (2012.01)
*B60W 50/00* (2006.01)

(52) Cooperative Patent Classification (CPC):
**B60W 30/18163; B60W 30/12;** B60W 2050/0074;
B60W 2554/406; B60W 2554/408; B60W 2555/60;
B60W 2556/50; B60W 2556/65

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **19.07.2024   KR 20240095359**

(71) Applicants:
• **Hyundai Motor Company**
  **Seoul 06797 (KR)**

• **Kia Corporation**
  **Seocho-gu,**
  **Seoul 06797 (KR)**

(72) Inventors:
• **Choi, Yoon Young**
  **18280 Hwaseong-si, Gyeonggi-do (KR)**
• **Min, Young bin**
  **18280 Hwaseong-si, Gyeonggi-do (KR)**

(74) Representative: **Hoffmann Eitle**
**Patent- und Rechtsanwälte PartmbB**
**Arabellastraße 30**
**81925 München (DE)**

(54)     **VEHICLE FOR PROVIDING DISCRETIONARY LANE CHANGE AND METHOD THEREOF**

(57)     Disclosed is a vehicle configured to provide a discretionary lane change. The vehicle may include a processor configured to: receive, from a driver of the vehicle via the communication interface, a request to activate a lane keeping function of the autonomous driving operation; determine, based on the request, whether the vehicle is in a state capable of performing the lane keeping function of the autonomous driving operation; activate, based on the vehicle being in the state capable of performing the lane keeping function of the autonomous driving operation, the lane keeping function of the autonomous driving operation; determine whether to activate a discretionary lane change function of the autonomous driving operation; and control, based on whether the discretionary lane change function of the autonomous driving operation is activated, the autonomous driving operation of the vehicle.

**EP 4 682 006 A1**

**Description**

**TECHNICAL FIELD**

The present disclosure relates to vehicle control, and more particularly to autonomous lane changing of a vehicle.

**BACKGROUND**

According to standards of the motorway chauffeur systems (MCS), the motorway chauffeur systems must mandatorily include autonomous driving within a lane (MCS-1) function. The lane change is classified into two categories, namely the discretionary lane change and the mandatory lane change. In case of the mandatory lane change, the lane change must be performed so as to arrive at a destination or to comply with laws and regulations, and therefore, enforcement of the use of the function is expected.

In case of the discretionary lane change (DLC), the lane change may be performed so as to facilitate convenience and is not mandatory. It should be possible for a driver to selectively use the function.

**SUMMARY**

One or more example embodiments of the present disclosure disclose a vehicle which classifies activation conditions of the discretionary lane change (DLC) function, and activates the discretionary lane change (DLC) function according to the activation conditions, and a method thereof.

The technical problem to be achieved by the present disclosure is not limited to the above-mentioned technical problems, and other technical problems that are not mentioned will be clearly understood by ordinary-skilled persons in the art to which the present disclosure pertains from the following description.

According to one or more example embodiments of the present disclosure, a vehicle may include: a sensor; a communication interface; and a processor configured to control, based on sensing data received from the sensor, an autonomous driving operation of the vehicle. The processor may be further configured to: receive, from a driver of the vehicle via the communication interface, a request to activate a lane keeping function of the autonomous driving operation; determine, based on the request, whether the vehicle is in a state capable of performing the lane keeping function of the autonomous driving operation; activate, based on the vehicle being in the state capable of performing the lane keeping function of the autonomous driving operation, the lane keeping function of the autonomous driving operation; determine whether to activate a discretionary lane change function of the autonomous driving operation; and control, based on whether the discretionary lane change function of the autonomous driving operation is activated, the autonomous driving operation of the vehicle.

The processor may be configured to determine whether the vehicle is in the state capable of performing the lane keeping function of the autonomous driving operation by: determining whether the vehicle is positioned within an operational design domain; determining whether a device for the lane keeping function of the autonomous driving operation is in normal operation; and determining whether a field of view for the lane keeping function of the autonomous driving operation is satisfied.

The processor may be configured to determine whether the vehicle is in the state capable of performing the lane keeping function of the autonomous driving operation by: based on the vehicle being positioned within the operational design domain, based on the device for the lane keeping function of the autonomous driving operation being in normal operation, and based on the field of view for the lane keeping function of the autonomous driving operation being satisfied, determining that the vehicle is in the state capable of performing the lane keeping function of the autonomous driving operation.

The processor may be further configured to: based on the vehicle being in the state capable of performing the lane keeping function of the autonomous driving operation, determine whether the vehicle is in a state capable of performing the discretionary lane change function of the autonomous driving operation.

The processor may be further configured to: determine whether the vehicle is positioned within an operational design domain; determine whether a device for the lane keeping function of the autonomous driving operation is in normal operation; and determine whether a field of view for the lane keeping function of the autonomous driving operation is satisfied.

The processor may be further configured to: based on the vehicle being positioned within the operational design domain, based on the device for the lane keeping function of the autonomous driving operation being in normal operation, and based on the field of view for the lane keeping function of the autonomous driving operation being satisfied, determine that the vehicle is in the state capable of performing the discretionary lane change function of the autonomous driving operation.

The processor may be further configured to: control, based on the vehicle being in the state capable of performing the discretionary lane change function of the autonomous driving operation, the vehicle in a standby mode without activating the discretionary lane change function of the autonomous driving operation.

The processor may be configured to: determine whether to activate the discretionary lane change function of the autonomous driving operation based on whether an automatic execution condition of the discretionary lane change function of the autonomous driving operation is preset.

The processor may be further configured to: activate, based on the automatic execution condition of the discretionary lane change function of the autonomous driving operation being preset, the discretionary lane change function of the autonomous driving operation.

The processor may be further configured to: activate, based on the automatic execution condition of the discretionary lane change function of the autonomous driving operation not being preset, the discretionary lane change function of the autonomous driving operation after receiving, from the driver of the vehicle, a request to activate the discretionary lane change function of the autonomous driving operation.

The processor may be further configured to: determine, based on the automatic execution condition of the discretionary lane change function of the autonomous driving operation not being preset, whether a lane change is needed; and send, to the driver of the vehicle and based on the lane change being needed, a request for activation of the discretionary lane change function of the autonomous driving operation.

The processor may be configured to determine whether the lane change is needed by: determining whether the lane change is needed further based on at least one of: traffic flow around the vehicle, traffic regulations, or geometrical road conditions.

The processor may be configured to determine whether the lane change is needed by: determining whether the lane change is needed further based on at least one of: whether a leading vehicle is hindering traffic flow, or whether a roadway event occurs.

The processor may be further configured to: determine, based on the automatic execution condition of the discretionary lane change function of the autonomous driving operation not being preset, whether a lane change is possible; and send, to the driver of the vehicle and based on the lane change being possible, a request for activation of the discretionary lane change function of the autonomous driving operation.

According to one or more example embodiments of the present disclosure, a method performed by an apparatus of a vehicle may include: controlling, based on sensing data received from a sensor of the vehicle, an autonomous driving operation of the vehicle; receiving, from a driver of the vehicle, a request to activate a lane keeping function of the autonomous driving operation; determining, based on the request, whether the vehicle is in a state capable of performing the lane keeping function of the autonomous driving operation; and activating, based on the vehicle being in the state capable of performing the lane keeping function of the autonomous driving operation, the lane keeping function of the autonomous driving operation ; determining whether to activate a discretionary lane change function of the autonomous driving operation; and controlling, based on whether the discretionary lane change function of the autonomous driving operation is activated, the autonomous driving operation of the vehicle.

Determining whether the vehicle is in the state capable of performing the lane keeping function of the autonomous driving operation may include: based on the vehicle being positioned within an operational design domain, based on a device for the lane keeping function of the autonomous driving operation being in normal operation, and based on a field of view for the lane keeping function of the autonomous driving operation being satisfied, determining that the vehicle is in the state capable of performing the lane keeping function of the autonomous driving operation.

Determining whether to activate the discretionary lane change function of the autonomous driving operation may include: determining, based on the vehicle being in the state capable of performing the lane keeping function of the autonomous driving operation, whether the vehicle is in a state capable of performing the discretionary lane change function of the autonomous driving operation.

Determining whether the vehicle is in the state capable of performing the discretionary lane change function of the autonomous driving operation may include: based on the vehicle being positioned within an operational design domain (ODD), based on a device for the lane keeping function of the autonomous driving operation being in normal operation, and based on a field of view for the lane keeping function of the autonomous driving operation being satisfied, determining that the vehicle is in the state capable of performing the discretionary lane change function of the autonomous driving operation.

Determining whether to activate the discretionary lane change function of the autonomous driving operation further may include: controlling, based on the vehicle being in the state capable of performing the discretionary lane change function of the autonomous driving operation, the vehicle in a standby mode without activating the discretionary lane change function of the autonomous driving operation.

The method may further include: determining whether to activate the discretionary lane change function of the autonomous driving operation based on whether an automatic execution condition of the discretionary lane change function of the autonomous driving operation is preset.

The method may further include: activating, based on the automatic execution condition of the discretionary lane change function of the autonomous driving operation being preset, the discretionary lane change function of the autonomous driving operation.

The method may further include: activating, based on the automatic execution condition of the discretionary lane change function of the autonomous driving operation not being preset, the discretionary lane change function of the autonomous driving operation after receiving, from the driver of the vehicle, a request to activate the discretionary lane change function of the autonomous driving operation.

Determining whether to activate the discretionary lane change function of the autonomous driving operation may include: sending, to the driver of the vehicle and based on an automatic execution condition of the discretionary lane change function of the autonomous driving operation not being preset, a request for activation of the discretionary lane change function of the autonomous driving operation.

Sending the request for activation of the discretionary lane change function of the autonomous driving operation may include: determining whether a lane change is needed based on at least one of: traffic flow around the vehicle, traffic regulations, or geometrical road conditions; and sending, to the driver of the vehicle and based on the lane change being needed, the request for activation of the discretionary lane change function of the autonomous driving operation.

Determining whether the lane change is needed may include: determining whether the lane change is needed based on whether a leading vehicle is hindering traffic flow, or whether a roadway event occurs.

Sending the request for activation of the discretionary lane change function of the autonomous driving operation may include: determining whether a lane change is possible; and sending, to the driver of the vehicle and based on the lane change being possible, the request for activation of the discretionary lane change function of the autonomous driving operation.

## BRIEF DESCRIPTION OF THE DRAWINGS

FIG. 1 is a view of an autonomous driving system.
FIG. 2 is a block diagram of an example vehicle system.
FIG. 3 is a view for describing operations of an autonomous driving system.
FIG. 4 is a flowchart illustrating an activation process of an autonomous driving within lane (MCS-1) function and a discretionary lane change (DLC) function.
FIG. 5 is a flowchart illustrating an activation process of an autonomous driving within lane (MCS-1) function.
FIG. 6 is a flowchart illustrating a process for determining whether an autonomous driving within lane (MCS-1) function can be performed.
FIG. 7 is a view illustrating a rear distance.
FIG. 8 is a view illustrating a front distance.
FIG. 9 is a flowchart illustrating a process for proposing activation of a discretionary lane change (DLC) function of an autonomous driving system.

## DETAILED DESCRIPTION

Herein below, one or more example embodiments of the present disclosure will be described in detail with reference to the accompanying drawings.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

Throughout the present disclosure, references to components, units, or modules generally refer to items that logically can be grouped together to perform a function or group of related functions. Like reference numerals are generally intended to refer to the same or similar components. Components, units, and modules may be implemented in software, hardware or a combination of software and hardware. The components, units, modules, and/or functions described above may be implemented and/or performed by one or more processors. For examples, the components, units, and/or modules may include processor(s), microprocessor(s), graphics processing unit(s), logic circuit(s), dedicated circuit(s), application-specific integrated circuit(s), programmable array logic, field-programmable gate array(s), controller(s), microcontroller(s), and/or other suitable hardware. The components, units, and/or modules may also include software control module(s) implemented with a processor or logic circuitry for example. The components, units, and/or modules may include or otherwise be able to access memory such as, for example, one or more non-transitory computer-readable storage media, such as random-access memory, read-only memory, electrically erasable programmable read-only memory, erasable programmable read-only memory, flash/other memory device(s), data registrar(s), database(s), and/or other suitable hardware. One or more storage type media may include any or all of the tangible memory of computers, processors, or the like, or associated modules thereof, such as various semiconductor memories, tape drives, disk drives and the like, which may provide non-transitory storage at any time for software programming.

The construction and operational effect of the present disclosure will be clearly understood from the following detailed description. Prior to describing example embodiments of the present disclosure in detail, it is noted that throughout the drawings the same components will be denoted by the same reference numerals when possible and a detailed description about existing components and functions is omitted when the subject matter of the present disclosure may be obscured by the description.

It is also noted that terms used in the detailed description of the present disclosure are defined below.

The vehicle refers to a vehicle in which the automated driving system (ADS) is provided and is capable of the autonomous driving. For example, by the ADS, the vehicle may perform at least one among steering, acceleration, deceleration, lane change and vehicle stopping (short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and the present disclosure is not limited thereto.

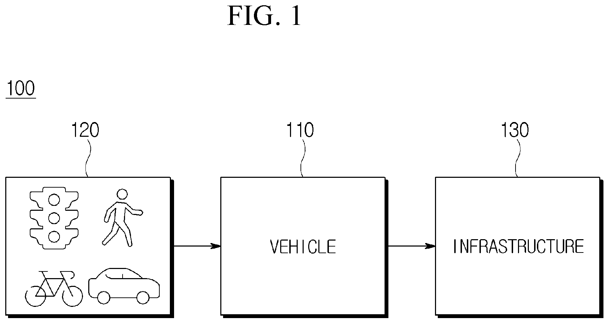

FIG. 1 is a view of an autonomous driving system.

Referring to FIG. 1, the autonomous driving system 100 may include a vehicle 110, a neighboring object 120, and an infrastructure 130.

The vehicle 110 may mean a vehicle in which the motorway chauffer systems (MCS) are provided and which performs a function of the discretionary lane change (DLC). The vehicle 110 may mean a component or a group of components capable of the DLC function.

The neighboring object 120 may mean another vehicle, a pedestrian, a personal mobility device (e.g., a bicycle), and a traffic signal device. The another vehicle, the pedestrian, the personal mobility device (e.g., a bicycle), and the traffic signal device may include a communication module configured to communicate with the vehicle 110. The pedestrian may communicate with the vehicle 110 through a terminal device which includes the communication module.

The infrastructure 130 includes the communication module, and may transmit geometrical information including information on a passing lane, a main road area, a road curvature, and whether falling within an event section and information on lane change restrictions to the vehicle 110.

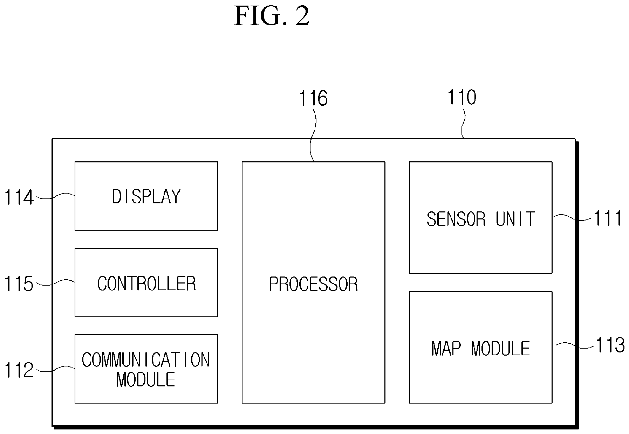

FIG. 2 is a block diagram of an example vehicle system.

In the configuration of the vehicle illustrated in FIG. 2, each component may be configured as one chip, one component, or one electronic circuit, or a combination of chips, components, and/or electronic circuits. Some of the components illustrated in FIG. 2 may be divided into a plurality of components and configured as different chips, different components, or different electronic circuits, and some components may be combined to form one chip, one component, or one electronic circuit. Some of the components illustrated in FIG. 2 may be omitted or other components not illustrated may be added. At least some of the components of FIG. 2 will be described with reference to the subsequent drawings.

Referring to FIG. 2, the vehicle 100 may include a sensor unit (also referred to as a sensor) 111, a communication module (also referred to as a communication interface) 112, a map module (also referred to as a map database or a digital map) 113, a display 114, a controller 115, and a processor 116.

The sensor unit 111 may sense an environment around the vehicle 110 using at least one sensor and generate data related to the surrounding environment based on the sensing result. For example, the sensor unit 111 may obtain information on objects around the vehicle (e.g., other vehicles, people, objects, curbs, guardrails, lanes, obstacles) based on the sensing data obtained from at least one sensor. Information on the object around the vehicle may include at least one among a position of the object, a size of the object, a shape of the object, a distance to the object, and a relative speed to the object. As another example, the sensor unit 111 may measure a position of the vehicle 110 using at least one sensor. For example, the sensor unit 111 may include at least one among a camera, a light detection and ranging (LIDAR) sensor, a radar sensor, an ultrasonic sensor, an infrared sensor, and a position measurement sensor. The listed sensors are merely examples for helping understanding, and the sensors included in the sensor unit 111 of the present disclosure are not limited thereto.

The camera may generate image data which includes an object positioned in front, at a rear and on a side of the vehicle 110, by capturing image around the vehicle. The lidar may generate information on an object positioned in front, at a rear and/or on a side of the vehicle 100 using light (or laser). The radar may generate information on an object positioned in front, at a rear and/or on a side of the vehicle 100 using electromagnetic waves (or radio waves). The ultrasonic sensor may generate information on an object positioned in front, at a rear and/or on a side of the vehicle 100 using ultrasonic waves. The infrared sensor may generate information on an object positioned in front, at a rear and/or on a side of the vehicle 100 using infrared rays.

The position measurement sensor may measure the current position of the vehicle 110. The position measurement sensor may include at least one among a global positioning system (GPS) sensor, a differential global positioning system (DGPS) sensor and a global navigation satellite system (GNSS) sensor. The position measurement sensor may generate position data of the vehicle based on a signal generated by at least one among a GPS sensor, DGPS sensor and GNSS sensor.

The communication module 112 may transmit or receive data with the infrastructure 130. The communication may be referred to as a vehicle-to-infrastructure (V2I) communication. In addition, the communication module 112 may transmit or receive data with another vehicle. The communication may be referred to as a vehicle-to-vehicle (V2V) communication. In addition, the V2I communication and the V2V communication can be collectively referred to as a vehicle-to-everything (V2X) communication. The communication module 112 may receive data transmitted from the infrastructure 130, and process the received data and send the processed data to the processor 116. In addition, the communication module 112 may transmit data generated by the vehicle 110 to the infrastructure 130. The communication module 112 may send or receive data with a terminal of the driver of the vehicle 110.

The communication module 112 may send or receive data by using a wireless communication protocol or a wired communication protocol. Examples of a wireless communication protocol may include wireless LAN (WLAN), digital living network alliance (DLNA), wireless broadband (Wibro), world interoperability for microwave access (Wimax), global system for mobile communication (GSM), code division multi access (CDMA), code division multi access 2000 (CDMA2000), Evolution-Data Optimized (EV-DO), wideband CDMA (WCDMA), High Speed Downlink Packet Access (HSDPA), High-Speed Uplink Packet Access (HSUPA), Institute of Electrical and Electronics Engineers (IEEE) 802.16, long-term evolution (LTE), long-term evolution-advanced (LTE-A), wireless mobile broadband service (WMBS), Bluetooth, radio frequency identification (RFID), Infrared Data Association (IrDA), ultra-wideband (UWB), Zigbee, near-field communication (NFC), ultrasound communication (USC), visible light communication (VLC), Wi-Fi, and Wi-Fi Direct. In addition, examples of the wired communication protocol may include wired local area network (LAN), wired wide area network (WAN), power line communication (PLC), Universal Serial Bus (USB) communication, Ethernet, serial communication, an optical/coaxial cable, and the like, but are not limited thereto, and any and all protocol which can provide an environment for communication with the other devices may be included.

The map module 113 may include map information, geometrical information per section of a highway, and information on lane change restrictions. The geometrical information may include information on a passing lane and a current lane section, information on a curvature of a road, and information on a section in which an event is occurred.

The display 114 may visually display information related to the vehicle 110. For example, the display 114 may provide various information related to a state of the vehicle 110 to the driver of the vehicle 110 under the control of the processor 116. The various information related to the state of the vehicle may include at least one among information representing whether various components included in the vehicle and/or at least one function of the vehicle are normally operated, and information representing the driving state of the vehicle.

If an automatic execution condition of the discretionary lane change (DLC) function to be described below is not preset, and if the processor 116 determines that the driving lane change is needed and/or the driving lane change is possible, the display 114 may visually display a message requesting activation of the DLC function.

The controller 120 may control an operation (e.g., an autonomous driving operation) of at least one component of the vehicle 110 and/or at least one function of the vehicle according to the control of the processor 116. The at least one function may be, for example, at least one among a steering function, an acceleration function (or a longitudinal acceleration function), a deceleration function (or a longitudinal deceleration function, a brake function), a lane change function, a lane detection function, an obstacle recognition and a distance detection function, a lateral control function, a powertrain control function, a safety zone detection function, an engine on/off, a power on/off, and a vehicle lock/unlock function. An autonomous driving operation of the vehicle 110 may include, for example, a lane keeping function and a discretionary lane change function.

The controller 115 may control at least one component of the vehicle and/or at least one function of the vehicle for autonomous driving of the vehicle 110 according to the control of the processor 130. For example, for the autonomous driving, the controller 115 may control the operation of at least one function among a steering function, an acceleration function, a deceleration function, a lane change function, a lane detection function, a lateral control function, an obstacle recognition and distance detection function, a powertrain control function, and a safe zone detection function.

The processor 116 may control the overall operation of the vehicle 110. The processor 116 may include an electrical control unit (ECU) capable of integrally controlling components in the vehicle 110. For example, the processor 116 may include a central processing unit (CPU) or a micro processing unit (MCU) capable of performing arithmetic processing.

The processor 116 may control the controller 115 based on the data received through the sensor unit 111 and the communication module 112. The processor 116 may generate a control signal for controlling the vehicle 110 according to the data received from the infrastructure 130, and send the generated control signal to the controller 115.

The processor 116 may mean a device capable of controlling the vehicle 110, and performing a series of operations or determinations for performing the lane change or vehicle passing. For example, in the processor 116, programs for performing the lane change or vehicle passing may be executed.

In the above-described FIG. 2, the controller 115 and the processor 116 are described as each separate component, however, the controller 115 and the processor 116 may be integrated into a single component.

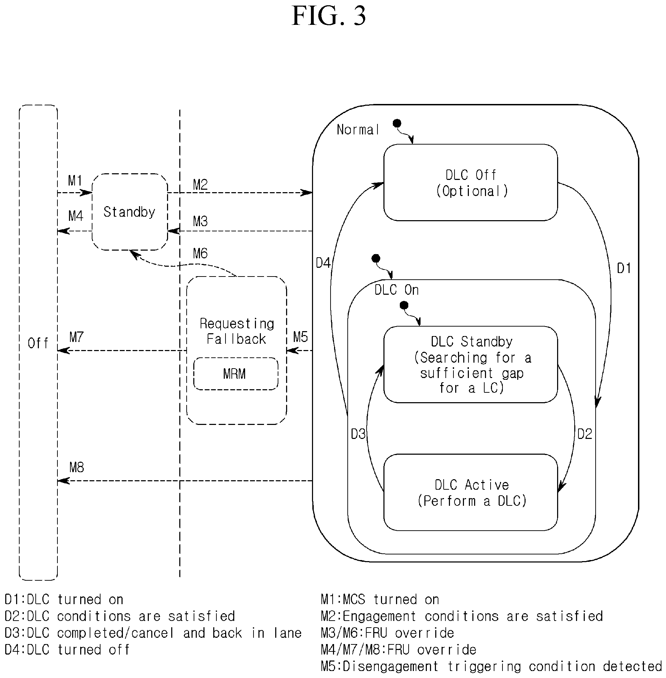

FIG. 3 is a view for describing operations of an autonomous driving system.

Referring to FIG. 3, in an operation of DLC-off, the processor 116 may automatically, or manually turn off the discretionary lane change (DLC) function while the autonomous driving within lane (MCS-1) is operated. The autonomous driving within lane (MCS-1) function may be part of an autonomous driving operation, and may be also referred to as a lane keeping function or an automated lane keeping function.

In a DLC-on operation, when the driver requests activation of the autonomous driving within lane (MCS-1), the processor 116 may automatically turn on the discretionary lane change (DLC) function according to existing settings defined by the driver. When the autonomous driving within lane (MCS-1) function gets into a normal state, the discretionary lane change (DLC) function may be automatically turned on, and the discretionary lane change (DLC) function may get into a standby state. When the driver selectively requests to do so, the processor may turn off the discretionary lane change (DLC) function. When the autonomous driving within lane (MCS-1) function is activated, an initial start of the discretionary lane change (DLC) may be permitted in a state where the discretionary lane change (DLC) function is turned off.

In a DLC-standby operation, the processor 116 may monitor the Motorway Chauffeur Systems (MCS), and determine whether the driving lane change is needed based on the monitoring result. In more detail, the processor 116 may determine whether the MCS is normally operated based on the vehicle state information, determine whether the target lane for finishing the lane change is continuously presented and detected, and determine whether the lane change is permitted based on information on lane change restrictions within the driving lane, which is received from the infrastructure 130, or prestored in the map module. The processor 116 may determine whether the driving lane change is needed when the MCS is normally operated, continuous presence of the target lane is detected, and the lane change is permitted. The processor 116 may determine whether all tires are positioned within the changed lane after performing the driving lane change.

In a DLC-Active operation, the processor 116 may start a process for the lane change, notify start of the process to the driver, and may notify the start of the process to neighboring vehicles. (a turn signal lamp)

In an MCS-Off operation, the processor 116 may turn off the autonomous driving within lane (MCS-1) function including the discretionary lane change (DLC) function.

In an MCS-standby operation, the processor 116 may monitor states of the MCS and the vehicle 110 continuously, and determine whether conditions for advancing into the discretionary lane change (DLC) are satisfied (M2).

In a Requesting-fallback operation, the processor 116 may perform a DDT (dynamic driving task) for a preset time period so that a fallback-ready user (FRU) can perform the fallback.

In an MCS-MRM operation, the processor 116 may select a lane having a lower risk in case the discretionary lane change (DLC) function is turned off (D4) (e.g., a lane proper for a slow speed, a lane nearest to a shoulder of a road or an emergency stop zone), and keep performing the lane change until reaching the shoulder or emergency stopping.

In an MCS-Normal operation, the processor 116 may perform entire DDTs (dynamic driving task) according to the minimum DDT performance requirement during the normal operation, in a state in which the autonomous driving within lane (MCS-1) function is normally operated, monitor the minimum driving environment, the FRU, the MCS, and the state of the vehicle 110 continuously, and detect generation of M5 conditions (disengagement-triggering conditions and direct disengagement conditions).

In a D1 operation, the processor 116 may activate the discretionary lane change (DLC) function when there is a request for activating the DLC by the driver in a state in which only the autonomous driving within lane (MCS-1) function is activated. The processor 116 may propose activation of the discretionary lane change (DLC) function to the driver in state in which only the autonomous driving within lane (MCS-1) function is activated.

In a D2 operation, the processor 116 may activate the discretionary lane change (DLC) function when there is a motivation behind the lane change (when it is determined that the lane change is needed).

In a D3 operation, the processor 116 may set the discretionary lane change (DLC) function to be in a standby state when the lane change is completed.

In a D4 operation, the processor 116 may set the discretionary lane change (DLC) function to be in an off state when the discretionary lane change (DLC) function is disabled by the FRU.

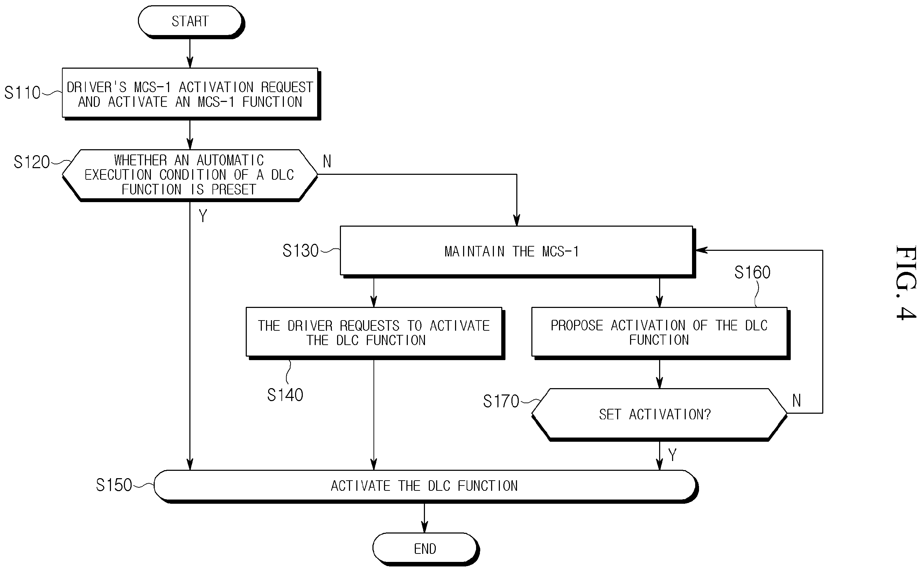

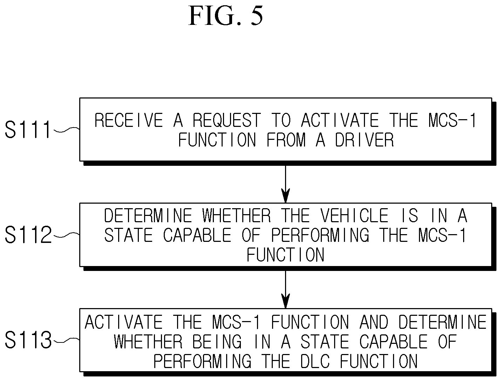

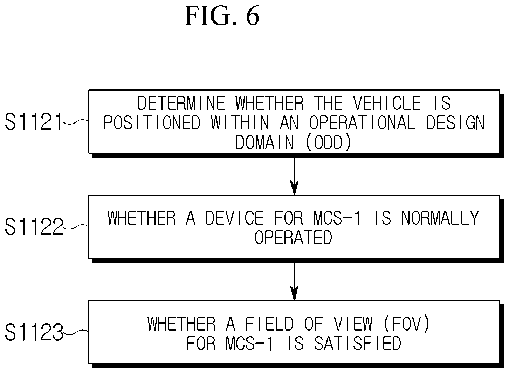

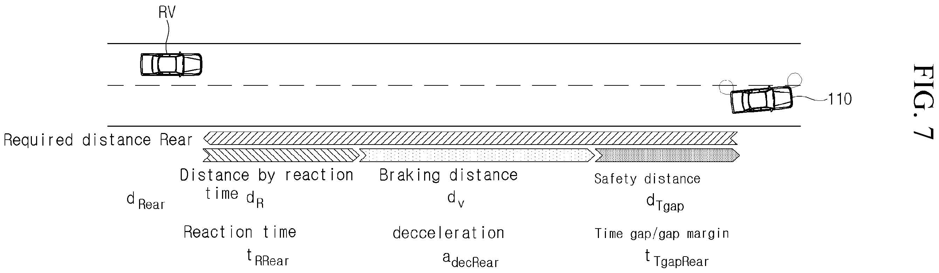

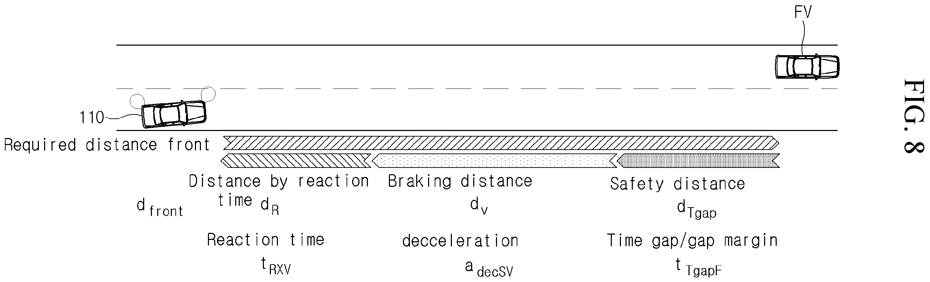

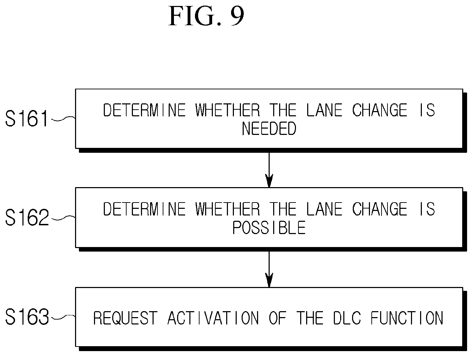

FIG. 4 is a flowchart illustrating an activation process of the autonomous driving within lane (MCS-1) function and the discretionary lane change (DLC) function. FIG. 5 is a flowchart illustrating an activation process of the autonomous driving within lane (MCS-1) function. FIG. 6 is a flowchart illustrating a process for determining whether the autonomous driving within lane (MCS-1) function can be performed. FIG. 7 is a view illustrating a rear distance. FIG. 8 is a view illustrating a front distance. FIG. 9 is a flowchart illustrating a process for proposing activation of the discretionary lane change (DLC) function of the autonomous driving system.

Referring to FIG. 4, an activation process of the autonomous driving within lane (MCS-1) function and the discretionary lane change (DLC) function includes: receiving a request to activate an autonomous driving within lane (MCS-1) function from a driver; determining whether the vehicle is in a state capable of performing the autonomous driving within lane (MCS-1) function; and when the vehicle is in a state capable of performing the autonomous driving within lane (MCS-1) function, activating the autonomous driving within lane (MCS-1) function, and determining whether to activate the discretionary lane change (DLC) function.

In more detail, referring to FIG. 5, in an operation S110, when the processor 116 receives a request to activate the autonomous driving within lane (MCS-1) function from a driver (S111), the processor 116 may determine whether the vehicle is in a state capable of performing the autonomous driving within lane (MCS-1) function before activating the autonomous driving within lane (MCS-1) function (S112), activate the autonomous driving within lane (MCS-1) function when the vehicle is in a state capable of performing the autonomous driving within lane (MCS-1) function, and determine whether the vehicle is in a state capable of performing the discretionary lane change (DLC) function (S113).

Referring to FIG. 6, the processor 116 may determine whether the following state conditions are satisfied, and when all the state conditions are satisfied, the processor 116 may determine that the vehicle is in a state capable of performing the autonomous driving within lane (MCS-1) function. That is, the processor 116 may determine whether the vehicle is positioned within an Operational Design Domain (ODD) (S1121), whether a device for autonomous driving within lane (MCS-1) (a sensor, an actuator, etc.) is normally operated (S1122), and whether a Field of View (FoV) for autonomous driving within lane (MCS-1) is satisfied (S 1123), and when all the state conditions described above are satisfied, the processor 116 may determine that the vehicle is in a state capable of performing the autonomous driving within lane (MCS-1) function. When the vehicle is positioned within the Operational Design Domain (ODD), the device for autonomous driving within lane (MCS-1) (a sensor, an actuator, etc.) is normally operated, and the Field of View (FoV) for autonomous driving within lane (MCS-1) is satisfied, the processor 116 may determine that the vehicle is in a state capable of performing the autonomous driving within lane (MCS-1) function, and activate the autonomous driving within lane (MCS-1) function.

When the autonomous driving within lane (MCS-1) function is activated, the autonomous driving within lane (MCS-1) function starts, and all the dynamic driving tasks (DDT) may be transferred from the driver to the autonomous driving system.

When the autonomous driving within lane (MCS-1) function starts through the activation of the MCS-1 function, and all the DDTs are transferred, the processor 116 may determine whether the vehicle is in a state capable of performing the discretionary lane change (DLC) function. That is, when the vehicle is in a state capable of performing the autonomous driving within lane (MCS-1) function, the processor 116 may activate the autonomous driving within lane (MCS-1) function and may determine whether the vehicle is in a state capable of performing the discretionary lane change (DLC) function.

Similar to the determination of state conditions of the autonomous driving within lane (MCS-1) function, the processor 116 may determine whether the vehicle is positioned within an Operational Design Domain (ODD), whether a device for autonomous driving within lane (MCS-1) is normally operated, and whether a Field of View for autonomous driving within lane (MCS-1) is satisfied.

When the vehicle is positioned within an Operational Design Domain (ODD), a device for autonomous driving within lane (MCS-1) is normally operated, and a Field of View for autonomous driving within lane (MCS-1) is satisfied, the processor 116 may determine that the vehicle is in a state capable of performing the discretionary lane change (DLC) function.

When the vehicle is in a state capable of performing the discretionary lane change (DLC) function, the processor 116 may not activate the discretionary lane change (DLC) function, and may stand by. That is, when the state conditions for the discretionary lane change (DLC) function are satisfied, unlike the autonomous driving within lane (MCS-1) function, the processor 116 may not immediately start the discretionary lane change (DLC) function and stand by.

In a state in which the state conditions for activating the discretionary lane change (DLC) function are satisfied and there is preset automatic execution condition of the discretionary lane change (DLC) function by the driver, when the situation corresponds to any one among having received the request to activate the discretionary lane change (DLC) function from the driver, and having proposed activation of the discretionary lane change (DLC) function to the driver, the processor 116 may activate the discretionary lane change (DLC) function.

In more detail, in an operation S 120, the processor 116 may determine whether to activate the discretionary lane change (DLC) function based on whether the automatic execution condition of the discretionary lane change (DLC) function is preset. At the request of the driver to activate the discretionary lane change (DLC) function from the driver, the processor 116 may activate the discretionary lane change (DLC) function when there is the automatic execution condition of the discretionary lane change (DLC) function preset by the driver.

When the processor receives the request to activate the autonomous driving within lane (MCS-1) function from the driver, the processor 116 may check the state conditions as to whether the autonomous driving within lane (MCS-1) function is possible, and when the state conditions are satisfied, the processor 116 may activate the autonomous driving within lane (MCS-1) function and perform a lane keeping operation and a vehicle headway maintenance operation. When performing the lane keeping operation and the vehicle headway maintenance operation of the autonomous driving within lane (MCS-1) function, the processor 116 may check a default setting value preset by the driver, or a previous setting value, and when the default setting or the value previous setting value includes information on activation of the discretionary lane change (DLC) function, the processor 116 may activate the discretionary lane change (DLC) function. That is, when the automatic execution condition of the discretionary lane change (DLC) function is preset, the discretionary lane change (DLC) function can be automatically activated.

In an operation S130, when the automatic execution condition of the discretionary lane change (DLC) function is not preset, the processor 116 may maintain the state of the autonomous driving within lane (MCS-1). At this instance, the autonomous driving system may have all the DDTs.

In an operation S140, when the processor receives the request to activate the discretionary lane change (DLC) function from the driver, the processor may activate the discretionary lane change (DLC) function. When the automatic execution condition of the discretionary lane change (DLC) function is not preset, the processor 116 may receive the request to activate the discretionary lane change (DLC) function from the driver while performing the lane keeping operation and the vehicle headway maintenance operation of the autonomous driving within lane (MCS-1) function, and may activate the discretionary lane change (DLC) function when receiving the request to activate the discretionary lane change (DLC) function.

The processor 116 may receive the request to activate the discretionary lane change (DLC) function while performing the DDTs (including tactical functions and operational functions) of the automatic driving within lane (MCS-1) function, when the situation does not fall within a case asking an approval or a request (e.g., an approval on a path change, a request to transfer the control authority, a request to check a minor fault, etc.) to a driver, or a case in which a control to avoid or alleviate a collision is performed. The driver may activate the discretionary lane change (DLC) function using an HMI device such as a physical button or a touch display etc. installed in the vehicle, and the vehicle may recognize the input of the driver through the HMI device, and may recognize the request to activate the discretionary lane change (DLC) function from the driver in real time.

In an operation S160, when the automatic execution condition of the discretionary lane change (DLC) function is not preset, the processor 116 may determine whether the lane change is needed and when determined that the lane change is needed, the processor 116 may request the activation of the discretionary lane change (DLC) function to the driver.

The processor 116 may determine whether the lane change is needed based on at least one among the surrounding traffic flow, traffic regulations, and geometrical road conditions.

The processor 116 may determine whether the lane change is needed based on whether the preceding vehicle (e.g., the leading vehicle) hinders traffic flow, or whether a roadway event occurs. When the processor 116 determines that the preceding vehicle hinders traffic flow due to a slow speed based on speed information of the preceding vehicle, the processor 116 may determine that the lane change is needed. When the processor 116 determines that the preceding vehicle hinders traffic flow due to reckless driving based on the speed information of the preceding vehicle, sudden stop or sudden acceleration, and a change width of a lateral movement within a lane, the processor 116 may determine that the lane change is needed. When a roadway event (road construction work, the own vehicle lane ceases to exist, etc.) is expected based on information received from the infrastructure 130, the processor 116 may determine that the lane change is needed.

The processor 116 may determine that the lane change is needed using map information received from the infrastructure 130, roadway event information (e.g., a construction work, a traffic accident, etc.), and prestored map information, when a certain event occurs within a preset distance in a forward direction (e.g., 2 km) while driving. The processor 116 may determine that the driving lane change is needed, when a case thereof corresponds to at least one among a case in which a driving lane is merged with a neighboring lane, a case in which a driving lane branches off in a direction different from a destination, a case in which an event occurs on a road of a driving lane, and a case in which a traffic jam occurs only on a road of a driving lane. The processor 116 may determine whether the driving lane change is needed based on a driving speed preset by the driver, a limit speed on a highway, and traffic flow. For example, when the driving speed preset by the driver is 80km/h or so while the vehicle 110 drives in the second lane on a three-lane highway having the limit speed on a highway of 1 10km/h, and the lanes of the highway is increased to four lanes, the processor 116 may determine that there is hindrance to the traffic flow and the driving lane change is needed because a difference between the preset driving speed and the limit speed is greater than a preset reference value (e.g., 20km/h) and the vehicle is driving in the second lane. The processor 116 may determine whether the lane change is needed based on driving manner information preset by the driver. In an assumption that on a highway, the average driving speed is fast and a change width in acceleration and deceleration is great in the second lane, and the average driving speed is relatively slow than that of the second lane and a change in acceleration and deceleration is relatively low in the third lane, when the driving manner information preset by the driver is driving manner information for yielding, the processor 116 may determine that the lane change is needed.

The processor 116 may request to activate the discretionary lane change (DLC) function to the driver while performing the DDTs (including tactical functions and operational functions) of the automatic driving within lane (MCS-1) function, when the situation does not fall within a case asking an approval or a request (e.g., an approval on a path change, a request to transfer the control authority, a request to check a minor fault, etc.) to a driver, or a case in which a control to avoid or alleviate a collision is performed.

If the automatic execution condition of the discretionary lane change (DLC) function is not preset, the processor 116 may determine whether the lane change is possible, and when determined that the lane change is possible, the processor 116 may request to activate the discretionary lane change (DLC) function to the driver.

The processor 116 may monitor information for determining the lane change when it is determined that the lane change is needed, and may determine whether the lane change is possible based on information for determining the lane change. The information for determining the lane change may include at least one information among information on lane change restrictions within the driving lane, geometrical information, and traffic flow information within a changing lane.

The processor 116 may determine whether the driving lane change is possible based on the lane change restriction information within the driving lane. The lane change restriction information may include at least one information among whether a lane line is a solid line, whether a lane is within a tunnel, whether a lane is a shoulder, and whether a lane is a passing lane. For example, in case where a dotted line, not a solid line, exists in a lane changing section, in case where a lane changing section is outside a tunnel, in case where a lane changing section is inside a tunnel but a dotted line exists therein, in case where a lane changing section is not a shoulder, in case where a lane changing section is a passing lane, that is, a situation does not correspond to the lane change restrictions, the processor 116 may determine that the driving lane change is possible. For example, the lane change is prohibited by the lane change restrictions, such as a case where a solid line exists in a lane changing section, a case where a lane changing section is inside a tunnel, a case where a lane changing section is a shoulder, and a case where a lane changing section is not a passing lane, the processor 116 may determine that the driving lane change is impossible.

The processor 116 may determine whether the driving lane change is possible based on the geometrical information. The geometrical information may include at least one information among whether a passing lane and a main road continue, whether a sharp curvature exists in a forward direction, and whether falling within an event section. The processor 116 may determine whether a passing lane and a main road continue, whether a sharp curvature exists in a forward direction, and whether falling within an event section based on the geometrical information received from the infrastructure 130 or stored in the map module 113. For example, when a situation thereof does not correspond to a case where a passing lane and a main road continue, a case where a sharp curvature does not exist in a forward direction, and a case where a lane does not fall within a section in which an event occurs (e.g., construction work area), which are cases where the lane change is impossible considering geometry, the processor 116 may determine that the driving lane change is possible. For example, when a situation thereof corresponds to a case where a passing lane and a main road do not continue, a case where a sharp curvature exists in a forward direction, and a case where a lane falls within a section in which an event occurs (e.g., construction work area), which are cases where the lane change is impossible considering geometry, the processor 116 may determine that the driving lane change is impossible.

The processor 116 may determine whether the driving lane change is possible based on traffic flow information within a changing lane. The traffic flow information within a changing lane may include at least one information among rear distance information or front distance information needed for the lane change, sensing information generated by the sensor unit 111, and an average speed information of a lane.

Referring to FIG. 7, the processor 116 may calculate a rear distance $d_{Rear}$ using a Mathematical Equation 1 below.

$$d_{Rear} = \left(v_{passerRear} - v_{SV}\right) \cdot t_{RRear} + \frac{\left(v_{passerRear} - v_{SV}\right)^2}{2 \cdot a_{decRear}} + v_{SV} \cdot t_{TgapRear}$$

...... Equation (1)

Here, $V_{passerRear}$ means the maximum speed of another vehicle at a rear RV which approaches in a rear direction, Vsv means a speed of the vehicle (own vehicle) 110, $t_{RRear}$ means a reaction time of another vehicle at a rear RV when the own vehicle 110 starts the lane change maneuver, $a_{decRear}$ means deceleration of another vehicle at a rear RV, $t_{TgapRear}$ means a time gap until another vehicle at a rear RV reaches a speed of the own vehicle 110 after the own vehicle 110 finishes deceleration.

The maximum speed $V_{passerRear}$ of another vehicle at a rear RV which approaches in a rear direction may be a speed obtained by adding a limit speed of another vehicle at a rear RV to a preset reference value (e.g., 30km/h).

The reaction time $t_{RRear}$ of another vehicle at a rear RV may be 1s, as a preset value, but is not limited thereto, and the reaction time thereof may have various values according to a setting.

The deceleration $a_{decRear}$ of another vehicle at a rear RV may be 3.5m/s$^2$ as a preset value, but is not limited thereto, and the deceleration thereof may have various values according to a setting.

The time gap $t_{TgapRear}$ until another vehicle at a rear RV reaches a speed of the own vehicle 110 after the own vehicle 110 finishes deceleration may be 0.8s, as a preset value, but is not limited thereto, and the time gap may have various values according to a setting.

Referring to FIG. 8, the processor 116 may calculate a front distance $d_{front}$ using a Mathematical Equation 2 below.

$$d_{Front} = \left(v_{passerF} - v_{SV}\right) \cdot t_{RSV} + \frac{\left(v_{passerF} - v_{SV}\right)^2}{2 \cdot a_{decSV}} + v_{SV} \cdot t_{TgapF}$$

$$\ldots\ldots \text{Equation (2)}$$

Here, $V_{passerF}$ means a speed of another vehicle in front FV, Vsv means a speed of the own vehicle 110, $t_{RSV}$ means a reaction time of the own vehicle 110 when the own vehicle 110 starts the lane change maneuver, $a_{decSV}$ means deceleration of the own vehicle 110, and $t_{TgapF}$ means a time gap until the own vehicle 110 reaches a speed of another vehicle in front FV after the own vehicle 110 finishes deceleration.

The reaction time $t_{RSV}$ of the own vehicle 110 may be 1s, as a preset value, but is not limited thereto, and the reaction time thereof may have various values according to a setting.

The deceleration $a_{decRear}$ of the own vehicle 110 may be 4m/s$^2$ as a preset value, but is not limited thereto, and the deceleration thereof may have various values according to a setting.

The processor 116 may calculate the time gap $t_{TgapF}$ until the own vehicle 110 reaches a speed of another vehicle in front FV after the own vehicle 110 finishes deceleration, using Mathematical Equations 3 or 4 below.

$$t_{TgapF} = 0.8[s] - \frac{\left(v_{passerF} - v_{SV}\right) \cdot 5.0[s]}{v_{SV}}$$

$$\ldots.. \text{Equation (3)}$$

$$t_{TgapF} = 15[m] - \frac{\left(v_{passerF} - v_{SV}\right) \cdot 5.0[s]}{v_{SV}}$$

$$\ldots.. \text{Equation (4)}$$

The processor 116 may determine that the lane change is possible when the front distance or the rear distance is greater than a preset reference distance.

Referring to FIG. 9, if the automatic execution condition of the discretionary lane change (DLC) function is not preset, the processor 116 may determine whether the lane change is needed (S161). When it is determined that the lane change is needed, the processor 116 may determine whether the lane change is possible (S162). When it is determined that the lane change is possible, the processor 116 may request activation of the discretionary lane change (DLC) function to the driver (S163). At this instance, the processor 116 may request activation of the discretionary lane change (DLC) function with a reason why the discretionary lane change (DLC) function is needed to the driver. The processor 116 may output a reason why the discretionary lane change (DLC) function is needed and a message requesting activation of the discretionary lane change (DLC) function in a screen through the display 114.

In an operation S170, when the activation settings of the discretionary lane change (DLC) function is confirmed by the driver, the processor 116 may activate the discretionary lane change (DLC) function. At this time, the processor 116 may set a target lane for the actual lane change and check a space for the lane change (searching for a sufficient gap for LC), and then, may perform the lane change.

As described above, according to the present disclosure, it is possible to activate the autonomous driving within lane (MCS-1) function according to the determination of state conditions of the MCS-1 function during the autonomous driving. In addition, according to the present disclosure, it is possible to selectively activate the discretionary lane change (DLC) function based on at least one among preset automatic activation conditions during the autonomous driving, a request on activation from the driver, and a proposal on activation from the system.

The functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise random-access memory (RAM), read-only memory (ROM), electrically erasable programmable read-only memory (EEPROM), compact disc read-only memory (CD-ROM) or other optical disk storage, magnetic disk storage or other magnetic storage devices, or any other medium that can be used to carry or store desired program code in the form of instructions or data structures and that can be accessed by a computer.

When the example embodiments are implemented in program code or code segments, it should be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof.

A vehicle may be configured to provide a discretionary lane change, including: a sensor unit; a communication module; and a processor configured to control an operation of a vehicle, and the processor may be configured to determine whether the vehicle is in a state capable of performing an autonomous driving within lane (MCS-1) function when receiving a request to activate an autonomous driving within lane (MCS-1) function from a driver; to activate an autonomous driving within lane (MCS-1) function when the vehicle is in a state capable of performing an autonomous driving within lane (MCS-1) function; and to determine whether to activate a discretionary lane change (DLC) function.

The processor may determine whether the vehicle is positioned within an Operational Design Domain (ODD), whether a device for autonomous driving within lane (MCS-1) is normally operated, and whether a Field of View for autonomous driving within lane (MCS-1) is satisfied.

When the vehicle is positioned within an Operational Design Domain (ODD), a device for autonomous driving within lane (MCS-1) is normally operated, and a Field of View for autonomous driving within lane (MCS-1) is satisfied, the processor may determine that the vehicle is in a state capable of performing an autonomous driving within lane (MCS-1) function and activate an autonomous driving within lane (MCS-1) function.

When the vehicle is in a state capable of performing an autonomous driving within lane (MCS-1) function, the processor may determine whether the vehicle is in a state capable of performing a discretionary lane change (DLC) function.

The processor may determine whether the vehicle is positioned within an Operational Design Domain (ODD), whether a device for an autonomous driving within lane (MCS-1) is normally operated, and whether a Field of View for autonomous driving within lane (MCS-1) is satisfied.

When the vehicle is positioned within an Operational Design Domain (ODD), a device for autonomous driving within lane (MCS-1) is normally operated, and a Field of View for autonomous driving within lane (MCS-1) is satisfied, the processor may determine that the vehicle is in a state capable of performing a discretionary lane change (DLC) function.

When the vehicle is in a state capable of performing a discretionary lane change (DLC) function, the processor may not activate a discretionary lane change (DLC) function, and may stand by.

The processor may determine whether to activate a discretionary lane change (DLC) function based on whether an automatic execution condition of a discretionary lane change (DLC) function is preset.

When an automatic execution condition of a discretionary lane change (DLC) function is preset, the processor may activate a discretionary lane change (DLC) function.

When an automatic execution condition of a discretionary lane change (DLC) function is not preset, the processor may activate a discretionary lane change (DLC) function upon receiving a request to activate a discretionary lane change (DLC) function from a driver.

When an automatic execution condition of a discretionary lane change (DLC) function is not preset, the processor may determine whether a lane change is needed, and when it is determined that a lane change is needed, the processor may request activation of a discretionary lane change (DLC) function to a driver.

The processor may determine whether a lane change is needed based on at least one among surrounding traffic flow, traffic regulations, and geometrical road conditions.

The processor may determine whether the lane change is needed based on whether a preceding vehicle in a forward direction hinders traffic flow, or whether a roadway event occurs.

When an automatic execution condition of a discretionary lane change (DLC) function is not preset, the processor may determine whether a lane change is possible, and when it is determined that a lane change is possible, the processor may request activation of a discretionary lane change (DLC) function to a driver.

A method for changing a lane during an autonomous driving, may include: receiving, by a vehicle, a request to activate an autonomous driving within lane (MCS-1) function from a driver; determining whether the vehicle is in a state capable of performing an autonomous driving within lane (MCS-1) function; and when the vehicle is in a state capable of performing an autonomous driving within lane (MCS-1) function, activating, by a vehicle, an autonomous driving within lane (MCS-1) function, and determining, by a vehicle, whether to activate a discretionary lane change (DLC) function.

The determining whether the vehicle is in a state capable of performing an autonomous driving within lane (MCS-1) function may include: determining whether the vehicle is positioned within an Operational Design Domain (ODD); determining whether a device for autonomous driving within lane (MCS-1) is normally operated; determining whether a Field of View for autonomous driving within lane (MCS-1) is satisfied; and when the vehicle is positioned within an Operational Design Domain (ODD), a device for autonomous driving within lane (MCS-1) is normally operated, and a Field of View for autonomous driving within lane (MCS-1) is satisfied, determining that the vehicle is in a state capable of performing an autonomous driving within lane (MCS-1) function.

The determining whether to activate a discretionary lane change (DLC) may function include: determining whether the vehicle is in a state capable of performing a discretionary lane change (DLC) function when it is determined that the vehicle is in a state capable of performing an autonomous driving within lane (MCS-1) function.

The determining whether the vehicle is in a state capable of performing a discretionary lane change (DLC) function may include: determining whether the vehicle is positioned within an Operational Design Domain (ODD); determining whether a device for autonomous driving within lane (MCS-1) is normally operated; determining whether a Field of View for autonomous driving within lane (MCS-1) is satisfied; and when the vehicle is positioned within an Operational Design Domain (ODD), a device for autonomous driving within lane (MCS-1) is normally operated, and a Field of View for autonomous driving within lane (MCS-1) is satisfied, determining that the vehicle is in a state capable of performing a discretionary lane change (DLC) function.

The determining whether to activate a discretionary lane change (DLC) function may further include: not activating a discretionary lane change (DLC) function, and standing by, when the vehicle is in a state capable of performing a discretionary lane change (DLC) function.

The determining whether to activate a discretionary lane change (DLC) function may further include: determining whether to activate a discretionary lane change (DLC) function based on whether an automatic execution condition of a discretionary lane change (DLC) function is preset.

The determining whether to activate a discretionary lane change (DLC) function based on whether an automatic execution condition of a discretionary lane change (DLC) function is preset may include: activating a discretionary lane change (DLC) function, when an automatic execution condition of a discretionary lane change (DLC) function is preset.

The determining whether to activate a discretionary lane change (DLC) function based on whether an automatic execution condition of a discretionary lane change (DLC) function is preset may include: activating a discretionary lane change (DLC) function upon receiving a request to activate a discretionary lane change (DLC) function from a driver, when an automatic execution condition of a discretionary lane change (DLC) function is not preset.

The determining whether to activate a discretionary lane change (DLC) function based on whether an automatic execution condition of a discretionary lane change (DLC) function is preset may include: requesting activation of a discretionary lane change (DLC) function to a driver, when an automatic execution condition of a discretionary lane change (DLC) function is not preset.

The requesting activation of a discretionary lane change (DLC) function to a driver may include: determining whether a lane change is needed based on at least one among surrounding traffic flow, traffic regulations, and geometrical road conditions; and requesting activation of a discretionary lane change (DLC) function to a driver, when it is determined that a lane change is needed.

The determining whether a lane change is needed may determine whether the lane change is needed based on whether a preceding vehicle in a forward direction hinders traffic flow, or whether a roadway event occurs.

The requesting activation of a discretionary lane change (DLC) function to a driver may include: determining whether a lane change is possible; and requesting activation of a discretionary lane change (DLC) function to a driver, when it is determined that a lane change is possible.

What has been described above includes examples of one or more example embodiments. It is, of course, not possible to describe every conceivable combination of components or methodologies for purposes of describing the aforementioned example embodiments, but one of ordinary skill in the art may recognize that many further combinations and permutations of various embodiments are possible. Accordingly, the described example embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

**Claims**

1. A vehicle comprising:

    a sensor;
    a communication interface; and
    a processor configured to control, based on sensing data received from the sensor, an autonomous driving operation of the vehicle, wherein the processor is further configured to:

        receive, from a driver of the vehicle via the communication interface, a request to activate a lane keeping function of the autonomous driving operation;
        determine, based on the request, whether the vehicle is in a state capable of performing the lane keeping function of the autonomous driving operation;
        activate, based on the vehicle being in the state capable of performing the lane keeping function of the autonomous driving operation, the lane keeping function of the autonomous driving operation;
        determine whether to activate a discretionary lane change function of the autonomous driving operation; and
        control, based on whether the discretionary lane change function of the autonomous driving operation is activated, the autonomous driving operation of the vehicle.

2. The vehicle of claim 1, wherein the processor is configured to determine whether the vehicle is in the state capable of performing the lane keeping function of the autonomous driving operation by:

    determining whether the vehicle is positioned within an operational design domain;
    determining whether a device for the lane keeping function of the autonomous driving operation is in normal operation; and

determining whether a field of view for the lane keeping function of the autonomous driving operation is satisfied.

3. The vehicle of claim 2, wherein the processor is configured to determine whether the vehicle is in the state capable of performing the lane keeping function of the autonomous driving operation by:
based on the vehicle being positioned within the operational design domain, based on the device for the lane keeping function of the autonomous driving operation being in normal operation, and based on the field of view for the lane keeping function of the autonomous driving operation being satisfied, determining that the vehicle is in the state capable of performing the lane keeping function of the autonomous driving operation.

4. The vehicle of any one of the preceding claims, wherein the processor is further configured to:
based on the vehicle being in the state capable of performing the lane keeping function of the autonomous driving operation, determine whether the vehicle is in a state capable of performing the discretionary lane change function of the autonomous driving operation.

5. The vehicle of claim 4, wherein the processor is further configured to:

determine whether the vehicle is positioned within an operational design domain;
determine whether a device for the lane keeping function of the autonomous driving operation is in normal operation; and
determine whether a field of view for the lane keeping function of the autonomous driving operation is satisfied.

6. The vehicle of claim 5, wherein the processor is further configured to:
based on the vehicle being positioned within the operational design domain, based on the device for the lane keeping function of the autonomous driving operation being in normal operation, and based on the field of view for the lane keeping function of the autonomous driving operation being satisfied, determine that the vehicle is in the state capable of performing the discretionary lane change function of the autonomous driving operation.

7. The vehicle of claim 6, wherein the processor is further configured to:
control, based on the vehicle being in the state capable of performing the discretionary lane change function of the autonomous driving operation, the vehicle in a standby mode without activating the discretionary lane change function of the autonomous driving operation.

8. The vehicle of any one of the preceding claims, wherein the processor is configured to:
determine whether to activate the discretionary lane change function of the autonomous driving operation based on whether an automatic execution condition of the discretionary lane change function of the autonomous driving operation is preset.

9. The vehicle of claim 8, wherein the processor is further configured to:
activate, based on the automatic execution condition of the discretionary lane change function of the autonomous driving operation being preset, the discretionary lane change function of the autonomous driving operation.

10. The vehicle of claim 8 or 9, wherein the processor is further configured to:
activate, based on the automatic execution condition of the discretionary lane change function of the autonomous driving operation not being preset, the discretionary lane change function of the autonomous driving operation after receiving, from the driver of the vehicle, a request to activate the discretionary lane change function of the autonomous driving operation.

11. The vehicle of any one of claims 8 to 10, wherein the processor is further configured to:

determine, based on the automatic execution condition of the discretionary lane change function of the autonomous driving operation not being preset, whether a lane change is needed; and
send, to the driver of the vehicle and based on the lane change being needed, a request for activation of the discretionary lane change function of the autonomous driving operation.

12. The vehicle of claim 11, wherein the processor is configured to determine whether the lane change is needed by:
determining whether the lane change is needed further based on at least one of: traffic flow around the vehicle, traffic regulations, or geometrical road conditions.

13. The vehicle of claim 11 or 12, wherein the processor is configured to determine whether the lane change is needed by: determining whether the lane change is needed further based on at least one of: whether a leading vehicle is hindering traffic flow, or whether a roadway event occurs.

14. The vehicle of any one of claims 9 to 13, wherein the processor is further configured to:

    determine, based on the automatic execution condition of the discretionary lane change function of the autonomous driving operation not being preset, whether a lane change is possible; and
    send, to the driver of the vehicle and based on the lane change being possible, a request for activation of the discretionary lane change function of the autonomous driving operation.

15. A method performed by an apparatus of a vehicle, in particular a vehicle according to any one of the preceding claims, the method comprising:

    controlling, based on sensing data received from a sensor of the vehicle, an autonomous driving operation of the vehicle;
    receiving, from a driver of the vehicle, a request to activate a lane keeping function of the autonomous driving operation;
    determining, based on the request, whether the vehicle is in a state capable of performing the lane keeping function of the autonomous driving operation;
    activating, based on the vehicle being in the state capable of performing the lane keeping function of the autonomous driving operation, the lane keeping function of the autonomous driving operation ;
    determining whether to activate a discretionary lane change function of the autonomous driving operation; and
    controlling, based on whether the discretionary lane change function of the autonomous driving operation is activated, the autonomous driving operation of the vehicle.

# FIG. 1

100

# FIG. 2

# FIG. 3

D1:DLC turned on
D2:DLC conditions are satisfied
D3:DLC completed/cancel and back in lane
D4:DLC turned off

M1:MCS turned on
M2:Engagement conditions are satisfied
M3/M6:FRU override
M4/M7/M8:FRU override
M5:Disengagement triggering condition detected

FIG. 4

FIG. 5

S111 — RECEIVE A REQUEST TO ACTIVATE THE MCS-1 FUNCTION FROM A DRIVER

S112 — DETERMINE WHETHER THE VEHICLE IS IN A STATE CAPABLE OF PERFORMING THE MCS-1 FUNCTION

S113 — ACTIVATE THE MCS-1 FUNCTION AND DETERMINE WHETHER BEING IN A STATE CAPABLE OF PERFORMING THE DLC FUNCTION

FIG. 6

S1121 — DETERMINE WHETHER THE VEHICLE IS POSITIONED WITHIN AN OPERATIONAL DESIGN DOMAIN (ODD)

S1122 — WHETHER A DEVICE FOR MCS-1 IS NORMALLY OPERATED

S1123 — WHETHER A FIELD OF VIEW (FOV) FOR MCS-1 IS SATISFIED

# FIG. 7

# FIG. 8

Required distance front

$d_{front}$

Distance by reaction time $d_R$

Braking distance $d_v$

Safety distance $d_{Tgap}$

Reaction time $t_{RXV}$

decceleration $a_{decSV}$

Time gap/gap margin $t_{TgapF}$

FV

110

# FIG. 9

S161 — DETERMINE WHETHER THE LANE CHANGE IS NEEDED

S162 — DETERMINE WHETHER THE LANE CHANGE IS POSSIBLE

S163 — REQUEST ACTIVATION OF THE DLC FUNCTION

Europäisches
Patentamt

European
Patent Office

Office européen
des brevets

# EUROPEAN SEARCH REPORT

**Application Number**

EP 25 15 4357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 082375 A1 (BOSCH GMBH ROBERT [DE]) 14 March 2013 (2013-03-14) * paragraphs [0005] - [0017], [0025] - [0047] * ----- | 1-15 | INV. B60W30/12 B60W30/18 B60W50/00 |
| X | DE 10 2018 009555 A1 (DAIMLER AG [DE]) 4 July 2019 (2019-07-04) * paragraphs [0015] - [0030] * * claim 1 * ----- | 1,15 | |
| X | US 2016/325757 A1 (WESTLUND MATHIAS [SE] ET AL) 10 November 2016 (2016-11-10) * paragraph [0008] * ----- | 1,15 | |

**TECHNICAL FIELDS SEARCHED (IPC)**

B60W

The present search report has been drawn up for all claims

| Place of search | Date of completion of the search | Examiner |
|---|---|---|
| Munich | 14 July 2025 | Müller-Nagy, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4357

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | Publication date | Patent family member(s) | Publication date |
|---|---|---|---|
| DE 102011082375 A1 | 14-03-2013 | DE 102011082375 A1 | 14-03-2013 |
| | | WO 2013034347 A2 | 14-03-2013 |
| DE 102018009555 A1 | 04-07-2019 | NONE | |
| US 2016325757 A1 | 10-11-2016 | CN 106114517 A | 16-11-2016 |
| | | EP 3091411 A1 | 09-11-2016 |
| | | US 2016325757 A1 | 10-11-2016 |

EPO FORM P0459

For more details about this annex : see Official Journal of the European Patent Office, No. 12/82